Europäisches Patentamt

European Patent Office

Office européen des brevets

(11) Veröffentlichungsnummer: **0 412 410 A2**

# EUROPÄISCHE PATENTANMELDUNG

(21) Anmeldenummer: **90114675.3**

(22) Anmeldetag: **31.07.90**

(51) Int. Cl.5: **G01N 21/31**

(30) Priorität: **07.08.89 DE 3926090**

(43) Veröffentlichungstag der Anmeldung:
**13.02.91 Patentblatt 91/07**

(84) Benannte Vertragsstaaten:
**DE GB IT**

(71) Anmelder: **BODENSEEWERK PERKIN-ELMER GMBH**
**Askaniaweg 4**
**D-7770 Überlingen/Bodensee(DE)**

(72) Erfinder: **Wulf, Jürgen, Dr.**

Langgasse 22
**D-7770 Überlingen(DE)**
Erfinder: **Lahmann, Werner**
**Zum Saibling 8**
**D-7770 Überlingen(DE)**

(74) Vertreter: **Wolgast, Rudolf, Dipl.-Chem. Dr. et al**
**Dipl.-Phys. Jürgen Weisse Dipl.Chem. Dr.**
**Rudolf Wolgast Bökenbusch 41 Postfach 11 03 86**
**D-5620 Velbert 11 Langenberg(DE)**

(54) Zweistrahlphotometer.

(57) Bei einem Zweistrahlphotometer, enthaltend eine Lichtquelle (10), Detektormittel, einen Probenbereich (44), optische Mittel (16,40,46,36) zum Leiten eines von der Lichtquelle (10,58) ausgehenden Lichtbündels (14) als Meßlichtbündel (34) durch den Probenbereich (44) hindurch auf die Detektormittel, Mittel (16,36) zum Leiten des gleichen Lichtbündels (14) als Referenzlichtbündel (32) unter Umgehung des Probenbereichs (44) auf die Detektormittel und Choppermittel in Meß und Referenzlichtbündel, durch welche der Strahlengang des von der Lichtquelle (10) ausgehenden Lichtbündels (14) in einen Strahlengang des Meßlichtbündels (34) und in einen Strahlengang des Referenzlichtbündels an einer Aufspaltstelle aufspaltbar ist und diese Strahlengänge, nachdem des Meßlichtbündel (34) durch den Probenbereich (44) hindurchgetreten ist, an einer Rekombinationsstelle wieder zu einem Strahlengang rekombinierbar, sind, liegen Aufspaltstelle und Rekombinationsstelle räumlich dicht beieinander. Die Choppermittel weisen einen einzigen Chopper (20) auf, der gleichzeitig die Aufspaltung und Rekombination von Meß-und Referenzlichtbündel (34 bzw. 32) bewirkt.

Fig.1

EP 0 412 410 A2

## TECHNISCHES GEBIET

Die Erfindung betrifft ein Zweistrahlphotometer, enthaltend

(a) eine Lichtquelle,

(b) Detektormittel,

(c) einen Probenbereich,

(d) optische Mittel zum Leiten eines von der Lichtquelle ausgehenden Strahlenbündels als Meßstrahlenbündel durch den Probenbereich hindurch auf die Detektormittel,

(e) Mittel zum Leiten des gleichen Strahlenbündels als Referenzstrahlenbündel unter Umgehung des Probenbereichs auf die Detektormittel und

(f) Choppermittel in Meß und Referenzstrahlenbündel, durch welche der Strahlengang des von der Lichtquelle ausgehenden Strahlenbündels in einen Strahlengang des Meßstrahlenbündels und in einen Strahlengang des Referenzstrahlenbündels an einer Aufspaltstelle aufspaltbar ist und diese Strahlengänge, nachdem das Meßstrahlenbündel durch den Probenbereich hindurchgetreten ist, an einer Rekombinationsstelle wieder zu einem Strahlengang rekombinierbar sind.

Bei Photometern, insbesondere bei Spektralphotometern, gilt es, den Einfluß von Schwankungen der Lampenhelligkeit oder der Detektorempfindlichkeit zu eliminieren. Bei manchen Photometern ist es auch erforderlich, den Einfluß von Lösungsmitteln o.dgl. auf eine Absorptionsmessung zu kompensieren. Aus diesem Grunde sieht man Zweistrahlphotometer vor. Von einer Lichtquelle ausgehend werden zwei Lichtbündel erzeugt: Ein Meßlichtbündel wird über oder durch eine Probe geleitet und beispielsweise von dieser Probe absorbiert. Ein Referenzlichtbündel wird längs eines die Probe umgehenden Referenzstrahlenganges geleitet und ist von der Probe nicht beeinflußt. Beide Lichtbündel werden abwechselnd auf ein und denselben Detektor geleitet. Änderungen der Lampenhelligkeit oder Änderungen der Detektorempfindlichkeit wirken sich dann auf die von den beiden Lichtbündeln erzeugten Signale in gleicher Weise aus. Bei der Signalverarbeitung, z.B. durch Verhältnisbildung, werden solche Einflüsse eliminiert.

## Zugrundeliegender Stand der Technik

Die DE-B-1 126 157 zeigt ein Zweistrahl-Spektralphotometer mit einem einzigen Chopper, also einem umlaufenden Bündelunterbrecher. Zwei Lichtbündel gehen von von einer gemeinsamen Lichtquelle aus. Eines der Lichtbündel tritt in einem Meßstrahlengang durch eine Meßküvette, das andere Lichtbündel tritt in einem Referenzstrahlengang durch eine Referenzküvette. Durch den Chopper werden die beiden Lichtbündel in einem gemeinsamen Strahlengang überlagert, wobei die Meß und Referenzlichtbündel von dem Chopper abwechselnd auf diesen gemeinsamen Strahlengang geleitet werden. Die so zeitlich in einem Strahlengang ineinandergeschachtelten Meß- und Referenzlichtbündel fallen auf einen gemeinsamen Detektor. Die Absorptionsmessung erfolgt durch optischen Abgleich mittels einer Kammblende im Referenzlichtbündel.

Hier ist zwar nur ein Chopper vorhanden. Meß- und Referenzlichtbündel gehen aber nach unterschiedlichen Richtungen von der Lichtquelle aus, und sind daher von vornherein nicht identisch. Bei manchen Lichtquellen, z.B. einer Hohlkathodenlampe bei der Atomabsorptions-Spektralphotometrie ist die Erzeugung zweier solcher nach verschiedenen Richtungen laufender Lichtbündel gar nicht möglich.

Die US-A-3 924 950 zeigt ein Atomabsorptions-Spektralphotometer mit einem Meßlichtbündel und einem Referenzlichtbündel. Das Meßlichtbündel durchsetzt einen Probenbereich. Dort sitzt eine Flamme oder ein Ofen als Atomisierungsvorrichtung. Das Referenzlichtbündel läuft an dem Probenbereich vorbei. Bei diesem Zweistrahlphotometer geht von der Lichtquelle, einer Hohlkathodenlampe ein einziges Lichtbündel aus. Dieses Lichtbündel wird durch einen Strahlenteiler in zwei Teillichtbündel mit festem Intensitätsverhältnis aufgespalten. Der Strahlenteiler bildet eine "Aufspaltungsstelle". Durch einen zweiten Strahlenteiler, oder besser "Strahlenkombinierer", werden das durch den Probenbereich gelaufene Meßlichtbündel und das Referenzlichtbündel wieder kombiniert. Der zweite Strahlenteiler bildet eine "Rekombinationsstelle". Das durch diese Überlagerung erzeugte Lichtbündel beaufschlagt einen Monochromator und einen Detektor. Monochromator und Detektor zusammen können als "Detektormittel" bezeichnet werden. Ein einziger Chopper unterbricht abwechselnd das Meßlichtbündel, das Referenzlichtbündel oder beide Lichtbündel.

Bei dieser Anordnung treten erhebliche Lichtverluste durch die Strahlenteiler auf. Der Chopper hat nicht die Funktion Lichtbündel zu teilen oder zu vereinigen sondern bewirkt nur eine abwechselnde Unterbrechung.

Die EP-A2-0 014 375 beschreibt ein Zweistrahl-Wechsellicht-Kolorimeter, bei dem der von einer Beleuchtungsoptik kommende Meßstrahl mit Hilfe eines Steuerorgans und feststehender Spiegel im Wechsel auf eine erste Meßküvette und darauffolgend durch eine zweite Meßküvette auf ein gemeinsames Photoelement abgelenkt wird. Das Steuerorgan ist dabei ein in den Strahlengang des Meßstrahls einschwenkbarer Spiegel, der den von der Lichtquelle erzeugten Meßstrahl um 90° ablenkt.

Hier bewirkt der einschwenkbare Spiegel eine Umschaltung zwischen Meß- und Referenzstrahlengang. Es findet aber keine Rekombination von Meß- und Referenzlichtbündel statt.

Eine andere Anordnung mit einschwenkbaren Spiegeln zeigt die EP-B1-0 084 391. Dort erfolgt auch die Rekombination der Strahlengänge durch einen enschwenkbaren Spiegel.

Die DE-C2-23 03 533 zeigt ein Atomabsorptions-Spektralphotometer, welches als Zweistrahlgerät mit einem eine atomisierte Probensubstanz enthaltenden Meßstrahlengang und einem Referenzstrahlengang ausgebildet ist. Das dort beschriebene Gerät ist auch zur Berücksichtigung der Untergrundabsorption eingerichtet. Das Gerät enthält eine linienemittierende erste Lichtquelle, welche die Resonanzlinie eines zu messenden Elements emittiert. Das Gerät enthält ferner eine zweite Lichtquelle, welche ein kontinuierliches Spektrum emittiert. Optische Systeme erzeugen Lichtbündel, die von der ersten bzw. der zweiten Lichtquelle ausgehen und deren Bündelachsen sich schneiden. Ein Monochromator wählt einen begrenzten, die Resonanzlinie enthaltenden Spektralbereich aus dem gesamten kontinuierlichen Spektrum aus. Meß- und Referenzlichtbündel beaufschlagen dann einen Detektor. Eine Chopperanordnung leitet in vorgegebener zyklischer Folge von vier aufeinanderfolgenden Intervallen das Lichtbündel von der linienemittierenden ersten Lichtquelle über den Meß- und Referenzstrahlengang und das Lichtbündel von der ein kontinuierliches Spektrum liefernden Lichtquelle über den Meß- und Referenzstrahlengang auf den Monochromator und den Detektor. Die Chopperanordnung hat dort zwei gleichachsig in axialem Abstand angeordnete, gemeinsam umlaufende Chopperscheiben. Beide Chopperscheiben sind optisch vor dem Meß- und Referenzstrahlengang im Bereich der Schnittpunkte der Bündelachsen der von den beiden Lichtquellen ausgehenden Lichtbündel angeordnet. An den Chopperscheiben sind spiegelnde und lichtdurchlässige Flächen so angeordnet, daß jeweils nur eines der von den Lichtquellen ausgehenden Lichtbündel auf einen der Strahlengänge (Meß- oder Referenzstrahlengang) geleitet wird.

Die DE-A-20 56 112 zeigt ein Zweistrahlphotometer mit zwei Choppern zum Trennen und Rekombinieren von Meß- und Refernzlichtbündel. Es ergibt sich dabei das Problem der synchronisierung der beiden Chopper.

Die DE-A-19 11 048 zeigt eine Chopperanordnung mit einem rotierenden Sektorspiegel, durch den das von einer Hohlkathodenlampe ausgehende Lichtbündel einmal in einen Meßstrahlengang und einmal in einen Referenzstrahlengang geleitet wird. Der Sektorspiegel ist auch auf der der Hohlkathodenlampe abgewandten Seite mit einem Spiegelsektor versehen. Hinter dem Sektorspiegel ist eine Deuterium-Gasentladungslampe angeordnet, die ein kontinuierliches Spektrum aussendet. Das von dieser Deuteriumlampe ausgehende Licht wird von der Rückseite des Sektorspiegels in den Referenzstrahlengang reflektiert, in den das Licht von der Kohlkathodenlampe bei einer anderen Stellung des Sektorspiegels durchgelassen wird. Bei einer Durchlaßstellung des Sektorspiegels wird einmal Licht von der Hohlkathodenlampe in üblicher Weise in den Referenzstrahlengang durchgelassen, während bei einer anderen Durchlaßstellung des Sektorspiegels Licht von der Deuterium-Gasentladungslampe in den Meßstrahlengang durchtritt und der Referenzstrahlengang durch eine Abdeckblende abgedeckt ist.


**Offenbarung der Erfindung**

Der Erfindung liegt die Aufgabe zugrunde, den Aufbau eines Zweistrahlphotometers der eingangs genannten Art zu vereinfachen und die Synchronisation von Strahlenteilung und Rekombination bei der Chopperanordnung zu verbessern.

Erfindungsgemäß wird diese Aufgabe dadurch gelöst, daß

(g) Aufspaltstelle und Rekombinationsstelle räumlich dicht beieinander liegen und

(h) die Choppermittel einen einzigen Chopper aufweisen, der gleichzeitig die Aufspaltung und Rekombination von Meß- und Referenzstrahlenbündel bewirkt.

Sowohl die Strahlenteilung als auch die Rekombination der Strahlengänge erfolgt somit durch Chopper. Meß- und Referenzlichtbündel werden dabei aus einem einzigen, von der Lampe ausgehenden Lichtbündel erzeugt. Es ist aber nur ein einziger Chopper vorgesehen, der sowohl die Strahlenteilung als auch die Rekombination bewirkt.

Ausgestaltung der Erfindung sind Gegenstand der Unteransprüche.

Einige Ausführungsbeispiele der Erfindung sind nachstehend unter Bezugnahme auf die zugehörigen Zeichnungen näher erläutert.

EP 0 412 410 A2

## Kurze Beschreibung der Zeichnungen

Fig.1 zeigt den Strahlengang eines Zweistrahlphotometers mit einem einzigen Chopper.

Fig.2 zeigt den Chopper bei der Ausführung nach Fig. 1.

Fig.3 zeigt den Strahlengang bei einer abgewandelten Ausführung des Zweistrahlphotometers nach Fig.1, wobei der Chopper ebenfalls nach Art von Fig.2 ausgebildet ist.

Fig.4 zeigt den Strahlengang bei einem Zweistrahlphotometer, bei welchem mit einem einzigen Chopper abwechselnd ein Meßlichtbündel von einer Hohlkathodenlampe, ein Referenzlichtbündel von der Hohlkathodenlampe und ein Lichtbündel von einer ein Kontinuum emittierenden Deuteriumlampe auf den Eintrittsspalt eines Monochromators geleitet wird.

Fig.5 zeigt den Chopper bei der Ausführung nach Fig.4.

Fig.6 zeigt eine weitere Ausführung eines Zweistrahlphotometers, bei welchem mit einem einzigen Chopper ein den Probenbereich durchsetzendes Meßlichtbündel und ein den Probenraum umgehendes Referenzlichtbündel erzeugt und abwechselnd auf den Eintrittsspalt eines Monochromators geleitet werden.

Fig.7 zeigt den zugehörigen Chopper.

Fig.8 zeigt ein Zweistrahlphotometer ähnlich Fig.6, bei welchem durch einen einzigen Chopper abwechselnd ein von einer Hohlkathodenlampe ausgehendes Meßlichtbündel, ein von der Hohlkathodenlampe ausgehendes Referenzlichtbündel und ein Lichtbündel, dasvon einer Deuteriumlampe ausgeht, auf den Eintrittsspalt eines Monochromators geleitet werden.

Fig.9 zeigt einen Chopper bei der Ausführung nach Fig.8.

Fig.10 zeigt eine Abwandlung des Choppers von Fig.9.

## Bevorzugte Ausführungen der Erfindung

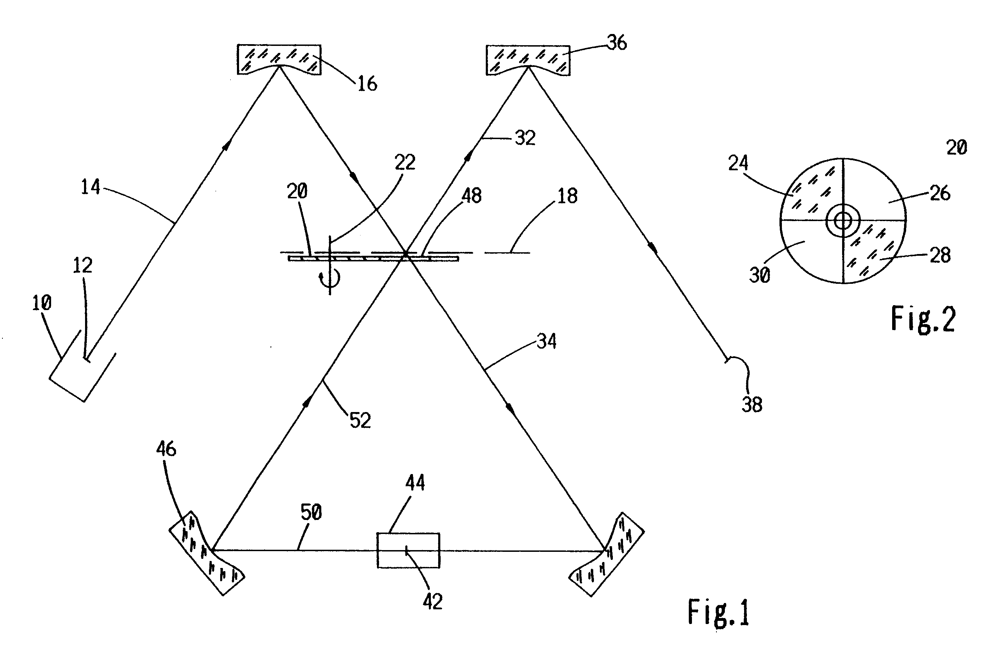

In Fig.1 ist mit 10 eine Hohlkathodenlampe bezeichnet. Die Hohlkathodenlampe 10 ist eine linienemittierende Lichtquelle, welche bei der Atomabsorptions-Spektrophotometrie die Resonanzlinien eines in einer Probe gesuchten Elements emittiert. Die Hohlkathodenlampe 10 erzeugt einen Lichtfleck 12 von beispielsweise 6 mm Durchmesser. Von der Hohlkathodenlampe 10 geht ein Lichtbündel 14 aus. Das Lichtbündel 14 wird durch einen ersten Hohlspiegel 16 umgelenkt und in einer Ebene 18 fokussiert und erzeugt dort ein verkleinertes Bild des Lichtflecks 12 von beispielsweise 3 mm Durchmesser. In der Ebene 18 ist ein Chopper 20 angeordnet. Der Chopper 20 rotiert um eine Achse 22. Der Chopper 20 hat vier Sektoren von je 90°. Ein Sektor 24 ist verspiegelt, ein Sektor 26 ist lichtdurchlässig für das Licht der Hohlkathodenlampe 10, ein Sektor 28 ist wieder verspiegelt und ein Sektor 30 ist wieder lichtdurchlässig. Die verspiegelten Sektoren und die lichtdurchlässigen Sektoren wechseln sich ab. Das auf den Chopper 20 unter einem Winkel zur Ebene 18 einfallende Lichtbündel 14 wird abwechselnd als Referenzlichtbündel 32 am Chopper 20 reflektiert oder tritt als Meßlichtbündel 34 durch den Chopper 20 hindurch.

Das Referenzlichtbündel 32 wird von einem zweiten Hohlspiegel 36 umgelenkt und auf den Eintrittsspalt eines (nicht dargestellten) Monochromators gesammelt. Es wird dabei eine zweite Abbildung 38 des Lichtflecks 12 der Hohlkathodenlampe 10 erzeugt. Der Strahlengang ist symmetrisch zu dem Strahlengang von dem Lichtfleck 12 über den Spiegel 16 zu dem Lichtfleck auf dem Chopper 20. Der Lichtfleck 38 hat daher den gleichen Durchmesser wie der Lichtfleck 12, also beispielsweise einen Durchmesser von 6 mm.

Das Meßlichtbündel 34 wird von einem dritten Hohlspiegel 40 umgelenkt und zu einem Lichtfleck 42 fokussiert. Der Lichtfleck von 3 mm Durchmesser wird dabei zu einem Lichtfleck von 1,5 mm Durchmesser verkleinert. Der Lichtfleck 42 liegt in einem Probenbereich 44. Dieser Probenbereich 44 kann eine Flamme sein, in welcher eine Probenlösung für die Atomabsorptions-Spektrophotometrie atomisiert wird. Der Probenbereich 44 kann aber auch der Innenraum eines Ofens für die elektrothermische Atomisierung von Proben sein. Ein Hohlspiegel 46 lenkt das Meßlichtbündel wieder um und fokussiert es wieder in der Ebene 18 auf dem Chopper 20 in einem Lichtfleck 48 von, in dem gewählten Beispiel, 3 mm Durchmesser.

Der Lichtfleck 48 des Meßlichtbündels 34 fällt mit dem Lichtfleck zusammen, der von dem Lichtbündel 14 in der Ebene 18 des Choppers 20 erzeugt wird. Der Strahlengang des Lichtbündels 14 und des Referenzlichtbündels 32 ist "M"-förmig. Der Strahlengang des Meßlichtbündels 34 unterhalb des Choppers 20 bildet ein gleichseitiges Dreieck. Der als Bild des Lichtflecks 12 erzeugte Lichtfleck 42 liegt dabei in der Mitte der dem Chopper 20 gegenüberliegenden Seite 50 dieses Dreiecks. Das Meßlichtbündel 34 verläuft naturgemäß hinter dem Chopper 20, wenn der von dem Lichtbündel 14 getroffene Sektor des Choppers 20 durchlässig ist, in der Verlängerung des Lichtbündels 14. Das durch den Hohlspiegel 46 von unten in Fig.1 her auf den Chopper geleitete Meßlichtbündel 34, das eine Seite 52 des besagten Dreiecks bildet, fluchtet mit dem am Chopper 20 reflektierten Referenzlichtbündel 32.

4

Am Ort des Lichtfleckes 38 sitzt der Eintrittsspalt eines (nicht dargestellten) Monochromators. Das aus dem Austrittsspalt dieses Monochromators austretende Licht wird in üblicher Weise auf enen photoelektrischen Detektor geleitet.

Die beschriebene Anordnung arbeitet wie folgt:

Wenn ein lichtdurchlässiger Sektor 26 oder 30 des Choppers 20 sich im Strahlengang des Meßlichtbündels 14 befindet, tritt das Lichtbündel 14 als Meßlichtbündel 34 durch den Chopper 20 hindurch. Der Weg des Lichtes verläuft dann von dem Leuchtfleck 12 der Hohlkathodenlampe 10 über den Hohlspiegel 16, durch den Chopper 20 hindurch auf den Hohlspiegel 40. Von dort läuft das Lichtbündel durch den Probenbereich 44 hindurch, wobei das Lichtbündel auf einen sehr kleinen Querschnitt verengt ist, zu dem Hohlspiegel 46. Der Hohlspiegel lenkt das Lichtbündel durch den Chopper 20 hindurch auf den Hohlspiegel 36. Der Hohlspiegel 36 sammelt das Lichtbündel auf dem Eintrittsspalt des Monochromators. Das Lichtbündel bildet so ein Meßlichtbündel, das durch den Probenbereich 44 hindurch tritt. Bei der Atomabsorptions-Spektrophotometrie wird das Lichtbündel in dem Probenraum 44 selektiv von den Atomen eines gesuchten Elements absorbiert, deren Resonanzlinien mit den von der Hohlkathodenlampe 10 emittierten Spektrallinien übereinstimmen. Der Monochromator wählt aus diesen Spektrallinien jeweils eine für die Messung geeignete aus.

Bei der weiteren Drehung des umlaufenden Choppers 20 kommt einer der reflektierenden Sektoren 24 oder 28 in den Strahlengang des Lichtbündels 14. Das einfallende Lichtbündel 14 wird daher an dem Chopper 20 als Referenzlichtbündel 32 reflektiert. Das Lichtbündel läuft dann von dem Leuchtfleck 12 über Hohlspiegel 16, verspiegelten Sektor 24 oder 28 des Choppers 20 und Hohlspiegel 36 zum Eintrittsspalt des Monochromators. In diesem Strahlengang umgeht das Lichtbündel den Probenbereich 44. Das Referenzlichtbündel 32 ist daher von der Probe unbeeinflußt und kann dazu dienen, die Einflüsse von Schwankungen der Lampenhelligkeit oder der Detektorempfindlichkeit zu kompensieren. Beim Umlauf des Choppers 20 wechseln sich das durch die Probe beeinflußte Meßlichtbündel und das von der Probe unbeeinflußte Referenzlichtbündel mit einer Frequenz von der doppelten Umlaufgeschwindigkeit des Choppers 20 ab. Das vom Hohlspiegel 46 zum Hohlspiegel 36 durchgehende Meßlichtbündel 34 erzeugt dabei einen Lichtfleck 48 von gleicher Größe wie der Lichtfleck, den das Lichtbündel 14 an dieser Stelle erzeugt. Die Achsen des durchtretenden Meßlichtbündels 34 und des reflektierten Referenzlichtbündels 32 fallen zusammen. Es erfolgt also eine Bündelüberlagerung zu einem gemeinsamen Strahlengang.

Bei der vorstehend beschriebenen Anordnung ist ein für Meß- und Referenzlichtbündel gemeinsamer Strahlengang vorhanden, der von der Hohlkathodenlampe 10 über den Hohlspiegel 16 bis zu dem Chopper 20 verläuft. Hier erfolgt eine Bündelteilung in Meßlichtbündel 34 und Referenzlichtbündel 32. Durch den Chopper 20 erfolgt aber gleichzeitig eine Bündelüberlagerung des durchgelassenen und nach Durchgang durch den Probenbereich 44 längs der Seite 52 des Dreiecks verlaufenden Meßlichtbündels 34 und des reflektierten Referenzlichtbündels 32. Hinter dem Chopper 20 ergibt sich wieder ein für Meßlichtbündel 34 und Referenzlichtbündel gemeinsamer Strahlengang vom Chopper 20 über den Hohlspiegel 36 zu dem Eintrittsspalt des Monochromators. Der "Meßstrahlengang" enthält das zwischen diesen gemeinsamen Strahlengängen liegende "Dreieck". Der "Referenzstrahlengang" ist auf null reduziert: Das Referenzlichtbündel durchläuft nur die beiden gemeinsamen Strahlengänge. Für die Trennung und Rekombination der beiden Lichtbündel ist ein einziger Chopper 20 vorgesehen, der hier an ein und derselben Stelle, nämlich an der Spitze des "Dreiecks" sowohl auf das "vorlaufende" Lichtbündel 14 als auch auf das "rücklaufende" Meßlichtbündel 34 im Bereich der Dreieckseite 52 wirksam ist.

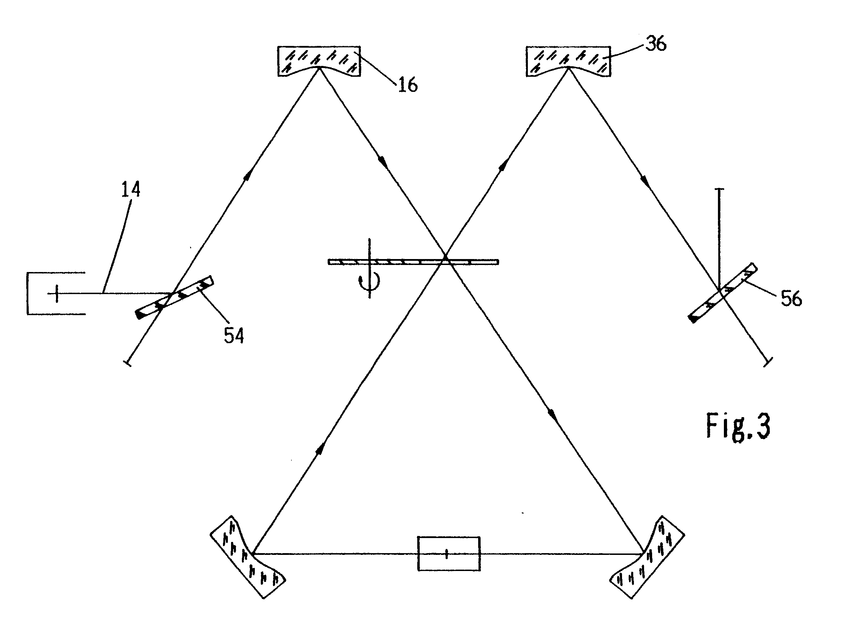

Fig.3 zeigt, daß Hohlkathodenlampe 10 und Eintrittsspalt des Monochromators nicht notwendig an den Enden eines "M"-Strahlenganges zu liegen brauchen. Die Hohlkathodenlampe 10 kann an der in Fig.3 dargestellten Stelle und mit der dort gezeigten Orientierung parallel zu der Richtung des Meßlichtbündels im Probenbereich 44 angeordnet sein. Das von der Hohlkathodenlampe 10 ausgehende Lichtbündel 14 wird dann durch einen Planspiegel 54 in Richtung auf den ersten Hohlspiegel 16 umgelenkt. Entsprechend kann auch das Lichtbündel in dem rekombinierten Strahlengang hinter dem zweiten Hohlspiegel 36 durch einen Planspiegel 56 umgelenkt werden, so daß das Lichtbündel in einer zur Dreieckseite 50 senkrechten Richtung auf den Eintrittsspalt des Monochromators fällt.

Im übrigen ist das Zweistrahlphotometer von Fig.3 ähnlich aufgebaut wie das Zweistrahlphotometer von Fig.1. Entsprechende Teile sind mit den gleichen Bezugszeichen versehen wie dort.

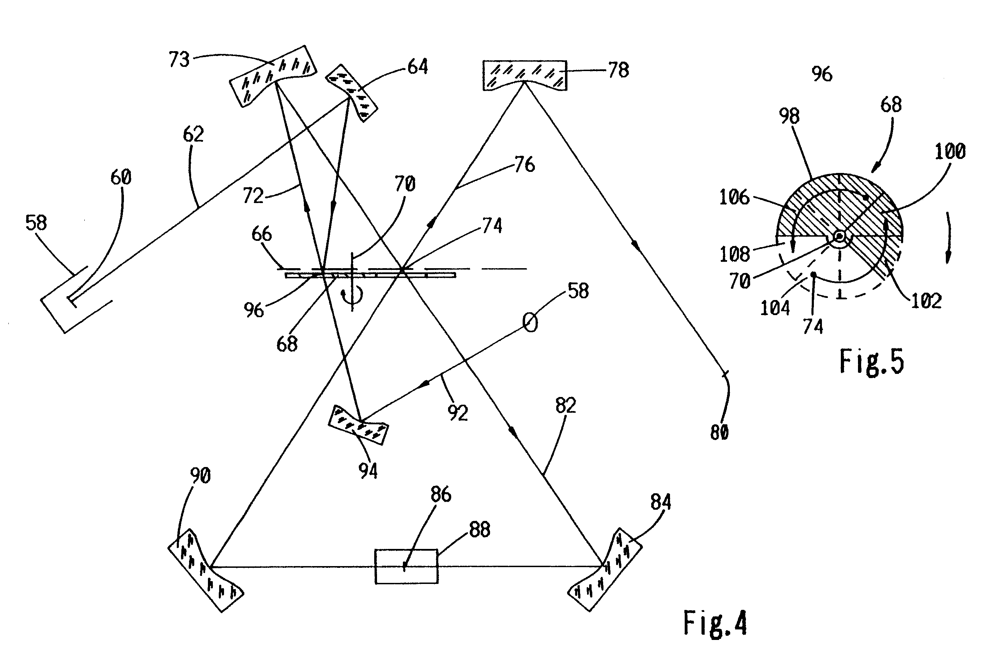

Fig.4 zeigt ein als Zweistrahlgerät ausgebildetes Atomabsorptions-Spektralphotometer, bei welchem in einer weiteren Phase des Zyklus ein Lichtbündel von einer Deuteriumlampe 58 in den Strahlengang geleitet wird, welches eine Kompensation der Untergrundabsorption gestattet.

In Fig.4 ist mit 58 eine Hohlkathodenlampe bezeichnet, die einen Leuchtfleck 60 erzeugt. Von dem Leuchtfleck 60 der Hohlkathodenlampe 58 geht ein Lichtbündel 62 aus. Das Lichtbündel 62 wird von einem Hohlspiegel 64 erfaßt. Der Hohlspiegel 64 lenkt das Lichtbündel 62 um und fokussiert es in einer Ebene 66.

In der Ebene 66 sitzt ein Chopper 68, der um eine Achse 70 umläuft. Der Chopper 68 hat reflektierende und lichtdurchlässige Sektoren, wie nachstehend im Zusammenhang mit Fig.5 noch erläutert wird.

Wenn das Lichtbündel 62 auf einen reflektierenden Sektor fällt, wird es in der Richtung 72 auf einen Hohlspiegel 73 reflektiert. Der Hohlspiegel 73 lenkt das Lichtbündel 62 um und fokussiert es ein zweites Mal in einem Punkt 74 auf der in bezug auf die Achse 70 diametral gegenüberliegenden Seite des Choppers 68.

Wenn die Oberfläche des Choppers 68 auch im Punkt 74 reflektierend ist, wird das Lichtbündel als Referenzlichtbündel 76 ähnlich wie bei Fig.1 auf einen Hohlspiegel 78 geleitet. Der Hohlspiegel 78 lenkt das Referenzlichtbündel 76 um und erzeugt einen Lichtfleck 80 als drittes Bild des Leuchtflecks 60 der Hohlkathodenlampe 58. Dort wird wieder der Eintrittsspalt eines (nicht dargestellten) Monochromators angeordnet.

Wenn die Oberfläche des Choppers 68 im Punkt 74 durchlässig ist bei Reflexion auf der diametral gegenüberliegenden Seite wie bisher, dann wird das Lichtbündel 72 von dem Chopper 68 als Meßlichtbündel 82 durchgelassen. Das Meßlichtbündel 82 fällt auf einen Hohlspiegel 84. Der Hohlspiegel 84 lenkt das Meßlichtbündel um und fokussiert das Meßlichtbündel 82 in einem Lichtfleck 86 in dem Probenbereich 88. Der Probenbereich 88 kann wieder eine Flamme oder ein Ofen für die elektrothermische Atomisierung von Proben sein. Hinter dem Probenbereich 88 fällt das Meßlichtbündel 82 wieder auf einen Hohlspiegel 90. Der Hohlspiegel 90 lenkt das Meßlichtbündel 82 um und fokussiert es wieder im Punkt 74 in der Ebene 66. Die Umlenkung des Meßlichtbündels 82 erfolgt so, daß das vom Hohlspiegel 90 durch den Punkt 74 gehende Meßlichtbündel 82 mit dem reflektierten Referenzlichtbündel 76 fluchtet. Die Anordnung ist hinsichtlich der Meß- und Referenzlichtbündel 82 bzw. 76 prinzipiell die gleiche wie in Fig.1.

Die Deuteriumlampe 58 liefert ein kontinuierliches Spektrum. Von der Deuteriumlampe 58 geht ein Lichtbündel 92 aus. Das Lichtbündel 92 wird von einem Hohlspiegel 94 umgelenkt und in der Ebene 66 in dem Punkt 96 fokussiert, der dem Punkt 74 diametral gegenüberliegt und in welchem auch das Lichtbündel 62 bei reflektierendem Sektor des Choppers 68 reflektiert wird. Die Bündelachse dieses von dem Hohlspiegel 90 reflektierten Meßlichtbündels 82 fluchtet mit der Richtung 72 des an dem Chopper 68 reflektierten Lichtbündels 62.

Der Chopper 68 ist in Fig.5 dargestellt. Der Chopper 68 weist einen reflektierenden Sektor 98 auf, der sich über einen stumpfen Winkel erstreckt. Daran schließt sich ein spitzwinkliger, lichtdurchlässiger Sektor 100 an. Auf den lichtdurchlässigen Sektor 100 folgt ein spitzwinkliger reflektierender Sektor 102. Der restliche, stumpfwinklige Sektor 104 des Choppers 68 ist lichtdurchlässig. Wenn der Chopper 68 als im Uhrzeigersinn umlaufend angenommen wird, dann ist die rückseitige Kante des reflektierenden Sektors 102 bzw. die vordere Kante des lichtdurchlässigen Sektors 100 um 180° winkelversetzt gegen die rückseitige Kante des reflektierenden Sektors 98 bzw. die vordere Kante des lichtdurchlässigen Sektors 104. Dem reflektierenden Sektor 102 liegt ein Teil 106 des reflektierenden Sektors 98 diametral gegenüber. Dem lichtdurchlässigen Sektor 100 liegt ein Teil 108 des lichtdurchlässigen Sektors 104 diametral gegenüber.

Man kann die Aufeinanderfolge der Lichtbündel am besten erläutern anhand einer kinematischen Umkehrung, wenn man nämlich annimmt, daß sich nicht der Chopper 68 relativ zu dem festliegenden Punkten 74 und 96 im Uhrzeigersinn dreht sondern die Punkte 74 und 96 sich auf Kreisbahnen entgegen dem Uhrzeigersinn gegenüber dem feststehenden Chopper 68 bewegen. Das ist in Fig.5 angedeutet. In der dargestellten Lage der Punkte 74 und 96 wird das Lichtbündel 62 im Punkt 96 an dem reflektierenden Sektor 98 des Choppers 68 reflektiert. Das von dem Hohlspiegel 73 reflektierte Lichtbündel 62 tritt jedoch in dem lichtdurchlässigen Sektor durch den Chopper 68 hindurch. Das Lichtbündel 62 von der Hohlkathodenlampe 58 wird als Meßlichtbündel 82 in der im Zusammenhang mit Fig.1 beschriebenen Weise durch den Probenbereich 88 geleitet. Bei weiterer Bewegung gelangt der Punkt 74 auf den reflektierenden Sektor 102, während der Punkt 96 im Teil 106 des Sektors 98 auf einer reflektierenden Oberfläche liegt. Es erfolgt also eine Reflexion des Lichtbündels 62 an dem Chopper 68 sowohl im Punkt 96 an dem reflektierenden Sektor 98 als auch im Punkt 74 an dem reflektierenden Sektor 74. In diesem Fall wird das von der Hohlkathodenlampe 58 ausgehende Lichtbündel 62 als Referenzlichtbündel 76 an dem Probenbereich vorbeigeleitet, wie dies oben in Zusammenhang mit Fig.1 erläutert ist.

Anschließend gelangen beide Punkte 74 und 96 auf lichtdurchlässige Sektoren: Punkt 74 gelangt auf den Sektor 100, und Punkt 96 bewegt sich auf Teil 108 des Sektors 104. Bei dieser Stellung des Choppers 68 fällt kein Licht von der Hohlkathodenlampe in den Strahlengang, da keine Reflexion im Punkt 96 stattfindet. Dafür tritt das Lichtbündel 92 im Punkt 96 durch den Sektor 98 des Choppers 68 hindurch und wird von dem Hohlspiegel 73 zum Punkt 74 reflektiert. Im Punkt 74 tritt das Lichtbündel 92 durch den lichtdurchlässigen Sektor 100 des Choppers 68 hindurch und durchläuft dann statt des Meßlichtbündels 82 das "Dreieck" und den Probenbereich 88. Das rücklaufende Lichtbündel tritt, wie das Meßlichtbündel 82, wieder im Punkte 74 durch den Sektor 100 des Choppers hindurch, jedoch nun in Richtung auf den

EP 0 412 410 A2

Hohlspiegel 78. Der Hohlspiegel 78 leitet das Lichtbündel auf den Eingangsspalt des Monochromators im Lichtfleck 80.

In einer weiteren Phase der Umdrehung des Choppers 68 gelangt der Punkt 74 wieder auf den reflektierenden Sektor 98. Der Punkt 96 bleibt weiterhin in dem lichtdurchlässigen Sektor 104 des Choppers 68. Dadurch tritt wieder das Lichtbündel 92 von der ein kontinuierliches Spektrum emittierenden Deuteriumlampe 58 im Punkt 96 durch den Chopper 68 hindurch. Dieses Lichtbündel 92 wird jedoch durch den Sektor 98 des Choppers 68 im Punkt 74 reflektiert, geht also ohne Durchtritt durch den Probenbereich 88 direkt zum Entrittsspalt des Monochromators.

Die beschriebene Anordnung liefert somit während jedes Umlaufs des Choppers nacheinander folgende Lichtbündel am Eingangsspalt des Monochromators: Linienspektrum über Meßstrahlengang durch Probenbereich, Linienspektrum über Referenzstrahlengang an Probenbereich vorbei, Kontinuum über Meßstrahlengang durch Probenbereich, Kontinuum über Referenzstrahlengang an Probenbereich vorbei. Meß- und Probenstrahlengang ergeben sich dabei so, wie das im Zusammenhang mit Fig.1 erläutert ist. Zusätzlich wird aber ein Lichtbündel einer Lichtquelle, die ein Kontinuum emittiert, zur Untergrundkompensation in den Strahlengang geleitet, wobei auch dieses Lichtbündel einmal über den Referenzstrahlengang geleitet wird, um auch Helligkeitsschwankungen der Deuteriumlampe zu kompensieren. Dies alles geschieht mit einem einzigen Chopper, der sowohl als Strahlenteiler als auch zur Rekombination der Lichtbündel dient, und zwar für beide Lichtquellen.

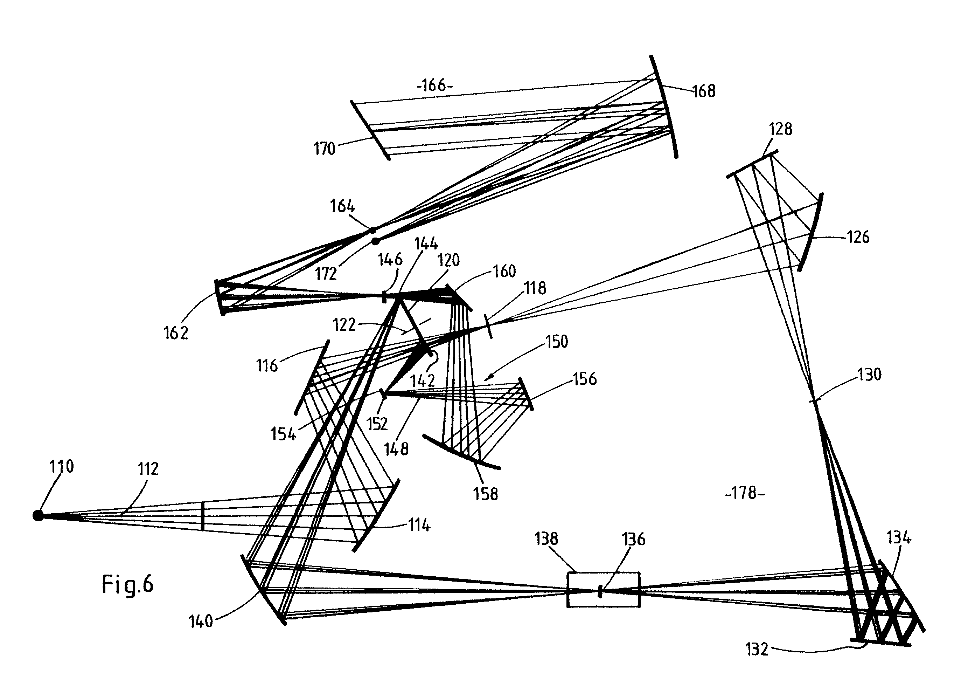

Fig.6 zeigt eine andere Anordnung, bei welcher mit einem einzigen Chopper sowohl eine Strahlenteilung als auch eine Rekombination von Meß- und Referenzlichtbündel erreicht wird.

Von einer Lichtquelle 110, z.B. einer Hohlkathodenlampe, geht ein divergentes Lichtbündel 112 aus. Das Lichtbündel 112 wird durch einen Hohlspiegel 114 umgelenkt und nach nochmaliger Umlenkung durch einen Planspiegel 116 in einem Punkt 118 fokussiert. Dabei tritt das Lichtbündel 112 zwischen dem Planspiegel 116 und dem Punkt 118 durch einen Chopper 120, der um eine Achse 122 umläuft.

Ein durch den Chopper 120 hindurchtretendes, wieder divergentes Lichtbündel 124 wird durch einen Hohlspiegel 126 über einen Planspiegel 128 in einem Punkt 130 fokussiert. Das von dem Punkt 130 wieder divergent ausgehende Lichtbündel 124 wird schließlich über einen Planspiegel 132 auf einen weiteren Hohlspiegel 134 geleitet, der das Lichtbündel 124 in einem Punkt 136 fokussiert. Der Punkt 136 liegt in einem Probenbereich 138. Von dem Punkt 136 ausgehend fällt das wieder divergente Lichtbündel 124 auf einen Hohlspiegel 140. Der Hohlspiegel 140 lenkt das Lichtbündel 124 wieder auf den einzigen Chopper 120. Das "vorlaufende" Lichtbündel 112 trifft auf den Chopper an einer Stelle 142 auf. Das rücklaufende Lichtbündel 124 trifft den Chopper 120 an einer Stelle 144, die gegenüber der Stelle 142 um $180^{\circ}$ winkelversetzt ist. Wenn der Chopper 120 an der Stelle 144 reflektierend ist, dann wird das Lichtbündel 124 von dem Hohlspiegel 140 über den Chopper 120 in einem Punkt 146 fokussiert. Das Lichtbündel 124 tritt durch den Probenbereich 138, stellt daher ein Meßlichtbündel dar. Der Strahlengang über die Hohlspiegel 126, 134 und 140 und die Planspiegel 128 und 132 stellt den Meßstrahlengang dar, welcher den Probenbereich 138 enthält.

Wenn der Chopper 120 an der Stelle 142 reflektierend ist, dann wird das Lichtbündel 112 als Referenzlichtbündel 148 von dem Chopper 120 in einen Referenzstrahlengang 150 reflektiert. Das Referenzlichtbündel 148 wird in einem Punkt 152 fokussiert. Dieser Punkt 152 liegt spiegelbildlich zu dem Punkt 118 in bezug auf die Ebene des Choppers 120. In dem Punkt 152 ist ein Planspiegel 154 angeordnet. Der Planspiegel 154 reflektiert das Referenzlichtbündel 148 auf einen Planspiegel 156. Der Planspiegel 156 reflektiert das Referenzlichtbündel 148 auf einen Hohlspiegel 158. Der Hohlspiegel 158 fokussiert das Referenzlichtbündel 148 über einen Planspiegel 160 im Punkt 146, wenn der Chopper 120 an der Stelle 144 lichtdurchlässig ist.

Der Punkt 146 wird durch einen Hohlspiegel 162 auf dem Eintrittsspalt 164 eines Monochromators 166 abgebildet. Der Monochromator 166 ist ein Gitter-Monochromator. Der Monochromator enthält einen Hohlspiegel 168. Durch den Hohlspiegel 168 wird das durch den Eintrittsspalt 164 eintretende Lichtbündel parallelgerichtet und auf ein Beugungsgitter 170 geleitet. Das durch das Beugungsgitter spektral zerlegte Licht fällt wieder auf den Hohlspiegel 168. Der Hohlspiegel 168 erzeugt ein Spektrum in Form von Bildern des Eintrittsspaltes 164 in der Ebene eines Austrittsspaltes 172. Durch den Austrittsspalt tritt dann Licht mit der Wellenlänge einer der Linien des von der Lichtquelle 110 emittierten Linienspektrums. Die Wellenlänge des durch den Austrittsspalt austretenden Lichtes wird durch Verschwenkung des Gitters 170 eingestellt.

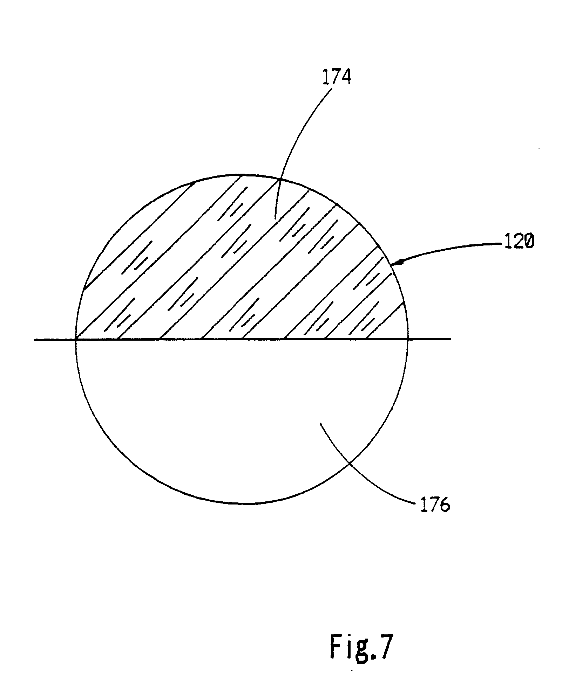

Der Chopper 120 ist in Fig.7 dargestellt. Der Chopper 120 weist auf einer Hälfte eine Verspiegelung 174 auf, ist also reflektierend. Auf der anderen Hälfte 176 ist der Chopper 120 lichtdurchlässig.

Wenn die lichtdurchlässige Hälfte 176 über die Stelle 142 läuft und an der diametral gegenüberliegenden Stelle 144 eine Reflexion an der Verspiegelung 174 erfolgt, wird das Lichtbündel 112 als Meßlichtbündel 124 längs des Meßstrahlenganges geleitet, der generell mit 178 bezeichnet ist. Wenn aber nach einer

7

halben Umdrehung des Choppers 120 die Verspiegelung 174 über die Stelle 142 läuft und der Chopper 120 an der Stelle 120 lichtdurchlässig ist, dann wird das Lichtbündel 112 als Referenzlichtbündel 148 in den Referenzstrahlengang 150 reflektiert. Meß- und Referenzlichtbündel 124 bzw. 148 werden schließlich im Punkt 146 fokussiert. Hinter dem Chopper 120 sind dort das reflektierte Meßlichtbündel 124 und das durchgelassene Referenzlichtbündel 148 gleich gerichtet und geometrisch übereinstimmend, so daß an der Stelle 144 eine Überlagerung oder Rekombination von Meß-und Referenzlichtbündel 124 bzw. 148 erfolgt. Das eine von der Lichtquelle 110 ausgehende Lichtbündel 112 wird also an der Stelle 142 in Meßlichtbündel 124 und Referenzlichtbündel 148 aufgespalten. An der Stelle 144 werden Meß- und Referenzlichtbündel 124 bzw. 148 wieder rekombiniert. Die beiden Stellen 142 und 144 sind nahe benachbart. Es kann daher ein einziger Chopper 120 für Strahlenteilung und Rekombination verwendet werden.

Wenn vorstehend von "Punkten" gesprochen wird, in denen die Lichtbündel fokussiert werden, dann handelt es sich tatsächlich um Lichtflecke, die Zwischenabbildungen eines Leuchtfleckes, der von der Lichtquelle gebildet wird, wie das im Zusammenhang mit Fig.1 beschrieben wurde. Das Zweistrahlphotometer nach Fig. 6 hat den Vorteil, daß die Strahlengänge mehrfach gefaltet sind, so daß sich eine raumsparende Anordnung ergibt.

Bei der Ausführung nach Fig.6 und 7 erstreckt sich die Meßzeit, während welcher das Meßlichtbündel 124 auf den Eintrittsspalt 164 des Monochromators 166 fällt, notwendigerweise über die halbe Periode jedes Zyklus. Dadurch geht Signalenergie für die Absorptionsmessung verloren. Außerdem ist keine Kompensation von Untergrundabsorption vorgesehen.

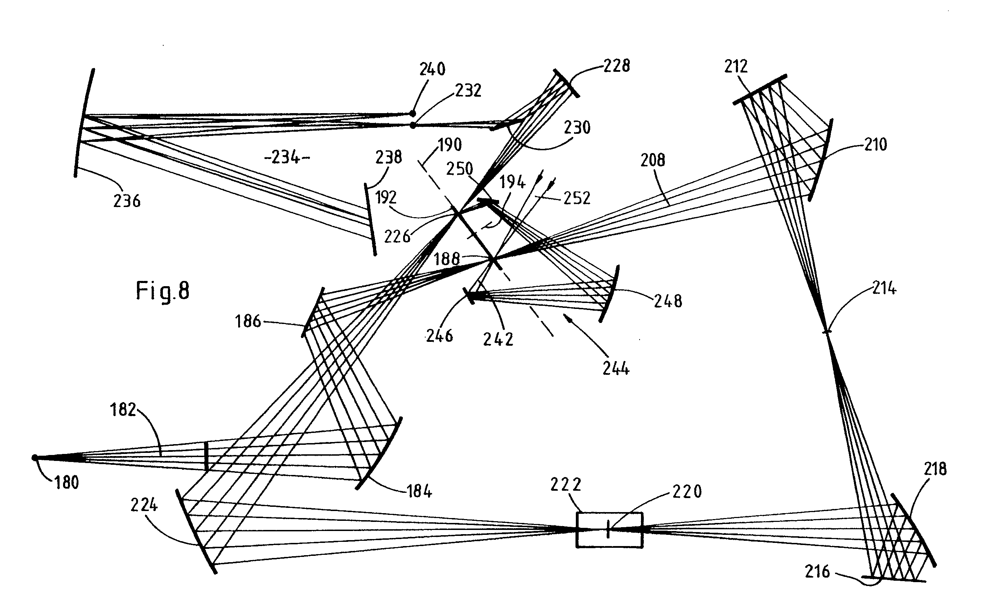

Fig.8 zeigt einen gefalteten Strahlengang, bei welchem die Zeitintervalle, während welcher das Lichtbündel längs des Meßstrahlenganges geleitet wird, wesentlich länger sind als die Zeitintervalle, während welcher das Licht längs des Referenzstrahlenganges geleitet wird. Außerdem ist bei dem Zweistrahlphotometer nach Fig.8 eine Kompensation der Untergrundabsorption vorgesehen.

In Fig.8 geht von einer Lichtquelle 180, vorzugsweise dem Leuchtfleck einer Hohlkathodenlampe, ein Lichtbündel 182 aus. Das Lichtbündel 182 wird durch einen Hohlspiegel 184 über einen Planspiegel 186 in einem Punkt 188 fokussiert. Der Punkt 188 liegt in einer Ebene 190. In der Ebene 190 sitzt ein Chopper 192, der um eine Achse 194 umläuft.

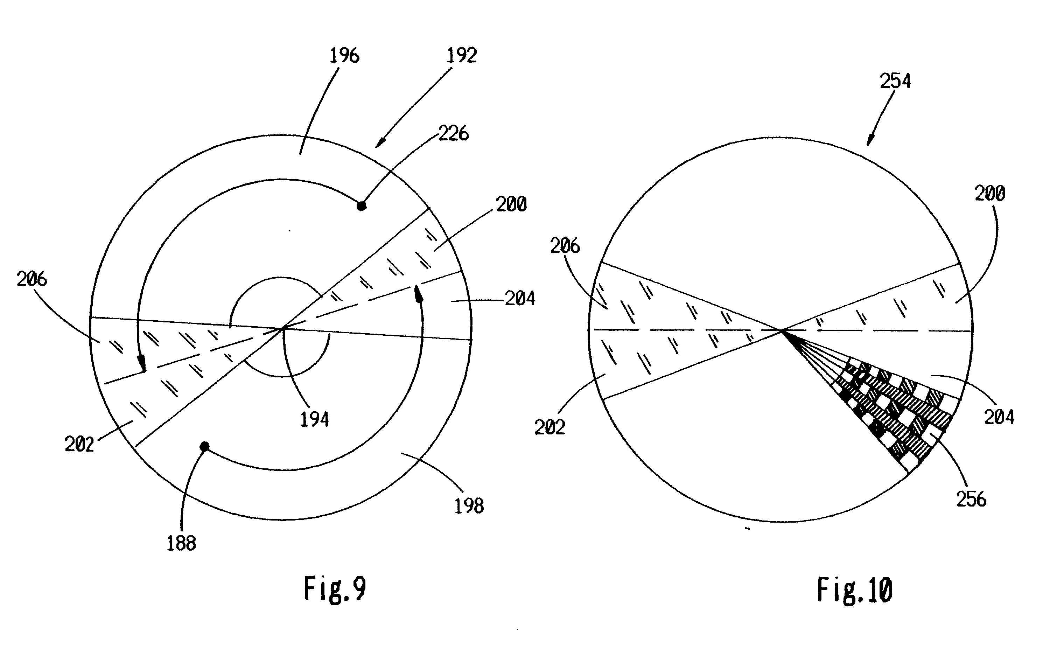

Der Chopper 192 ist in Fig.9 dargestellt. Der Chopper 192 weist zwei zentral symmetrisch zu der Achse 194 angeordnete lichtdurchlässige Sektoren 196 und 198 auf. Die Sektoren 196 und 198 erstrecken sich jeweils über einen stumpfen Winkel von beispielsweise 150°. An den Sektor 196 schließt sich im Uhrzeigersinn von Fig.9 gesehen ein verspiegelter Sektor 200 an, der sich beispielsweise über einen Winkel von 15° erstreckt. Diesem Sektor 200 liegt ein ebenfalls verspiegelter Sektor 202 von 15° diametral gegenüber, also zentralsymmetrisch dazu in bezug auf die Achse 194. An den Sektor 200 schließt sich ein lichtdurchlässiger Sektor 204 von wieder 15° an. Der Sektor 204 bildet mit dem Sektor 198 einen durchgehenden, lichtdurchlässigen Sektor, wird aber wegen seiner Funktion gesondert betrachtet. Dem Sektor 204 liegt ein verspiegelter Sektor 206 von 15° diametral gegenüber. Die Sektoren 202 und 206 bilden einen durchgehenden verspiegelten Sektor, der sich über 30° erstreckt, haben aber, wie noch erläutert wird, verschiedene Funktionen.

Wenn der Punkt 188 auf dem lichtdurchlässigen Sektor 198 liegt, dann tritt das Lichtbündel 182 als Meßlichtbündel 208 durch den Chopper 192 hindurch und fällt auf den Hohlspiegel 210. Von dem Hohlspiegel 210 wird das Meßlichtbündel 208 über einen Planspiegel 212 in einem Punkt 214 fokussiert. Das von dem Punkt 214 divergent ausgehende Meßlichtbündel fällt auf einen Planspiegel 216. Der Planspiegel 216 leitet das Meßlichtbündel 208 auf einen Hohlspiegel 218. Der Hohlspiegel 218 fokussiert das Meßlichtbündel 208 in einem Punkt 220. Der Punkt 220 liegt in einem Probenbereich 222. Von dem Punkt 222 fällt das Meßlichtbündel 208 auf einen Hohlspiegel 224. Der Hohlspiegel 224 sammelt das Meßlichtbündel 208 in einem Punkt 226 in der Ebene des Choppers 192. Der Punkt 226 liegt dem Punkt 188 diametral gegenüber in bezug auf die Achse 194. Die Spiegel 184, 210 und 218 sind bei diesem Strahlengang übereinstimmende Bauteile. Wenn der Punkt 188 auf dem lichtdurchlässigen Sektor 198 liegt, dann liegt der Punkt 226 auf dem lichtdurchlässigen Sektor 196 des Choppers 192. Das Meßlichtbündel 208 tritt also durch den Chopper 192 hindurch und wird durch einen Hohlspiegel 228 über einen Planspiegel 230 auf dem Eintrittsspalt 232 eines Monochromators 234 fokussiert.

Der Monochromator 234 entspricht im Prinzip dem Monochromator 166 von Fig.6 mit einem Hohlspiegel 236, einem Beugungsgitter 238 und einem Austrittsspalt 240.

Wenn der Chopper 192 das Lichtbündel 182 im Punkt 188 reflektiert, dann wird es als Referenzlichtbündel 242 in einen Referenzstrahlengang 244 geleitet. Das Referenzlichtbündel 242 fällt auf einen Planspiegel 246. Der Planspiegel 246 lenkt das Referenzlichtbündel 242 auf einen Hohlspiegel 248. Der Hohlspiegel 248 fokussiert das Referenzlichtbündel 242 über einen Planspiegel 250 im Punkt 226. Wenn der Chopper in diesem Punkt reflektierend ist, wird das Referenzlichtbündel 242 auf den Hohlspiegel 228 reflektiert. Das reflektierte Referenzlichtbündel 242 ist in diesem Bereich geometrisch identisch mit dem durchgelassenen Meßlichtbündel 208.

Von einer (nicht dargestellten) Deuteriumlampe fällt ein Lichtbündel 252 mit einem kontinuierlichen Spektrum im Punkt 188 auf den Chopper 192. Das Lichtbündel 252 fluchtet mit dem Referenzlichtbündel 242 und wird bei reflektierendem Chopper in die Richtung des Meßlichtbündels 208 reflektiert.

Bei der Betrachtung der Funktion des Zweistrahlphotometers und des Choppers 192 sollen hier, ähnlich wie bei der Beschreibung von Fig.5, statt der Umlaufbewegung des Choppers 192 gegenüber den stillstehenden Punkten 188 und 226 Kreisbewegungen der Punkte 188 und 226 gegenüber dem als stillstehend angesehenen Chopper 192 betrachtet werden. Die Beschreibung erfolgt praktisch aus der Perspektive eines mit dem Chopper 192 rotierenden Beobachters.

Wenn der Chopper im Uhrzeigersinn von Fig.9 rotiert, dann bewegt sich der Punkt 188 entgegen dem Uhrzeigersinn, wie angedeutet, auf den Sektor 204. Gleichzeitig gelangt der Punkt 226 auf den diesem diametral gegenüberliegenden Sektor 206. Sektor 204 ist durchlässig, Sektor 206 ist reflektierend. In dieser Stellung des Choppers 192 wird das von der Deuteriumlampe ausgehende Lichtbündel 252 von dem Chopper 192 zu dem Referenzstrahlengang 244 durchgelassen. Das Lichtbündel 252 durchläuft den Referenzstrahlengang 244, wie das oben für das Referenzlichtbündel 242 beschrieben wurde. Im Punkt 226 sitzt der reflektierende Sektor 206 des Choppers 192. Das Lichtbündel 252 wird daher nach Durchlaufen des Referenzstrahlenganges 244 von dem Chopper 192 auf den Hohlspiegel 228 reflektiert und von diesem, wie das Meß- und das Referenzlichtbündel von der linienemittierenden Lichtquelle 180 auf den Eintrittsspalt 232 des Monochromators 234 geleitet.

Bei weiterer Drehung des Choppers 192 gelangt Punkt 188 auf den reflektierenden Sektor 200. Jetzt wird das Lichtbündel 182 von der linienemittierenden Lichtquelle 180 als Referenzlichtbündel in den Referenzstrahlengang 244 reflektiert. Das Referenzlichtbündel wird im Punkt 226 durch den Sektor 202 zum Hohlspiegel 228 reflektiert.

Anschließend laufen wieder lichtdurchlässige Sektoren 196 und 198 durch beide Punkte 188 und 226. Es ist jetzt Punkt 188 im Bereich des Sektors 196 und Punkt 226 im Bereich des Sektors 198. Das Lichtbündel 182 von der linienemittierenden Lichtquelle 180 läuft als Meßlichtbündel 208 längs des Meßstrahlenganges und wird im Punkt 226 zum Hohlspiegel 228 durchgelassen.

Als nächstes gelangt Punkt 188 in den Bereich des reflektierenden Sektors 206. Der diammetral gegenüberliegende Sektor 204 im Punkte 226 ist lichtdurchlässig. Es wird daher das Lichtbündel 252 von der Deuteriumlampe in den Meßstrahlengang reflektiert und nach Durchgang durch den Probenbereich 222 und Durchtritt durch den Chopper 192 im Punkt 226 von dem Hohlspiegel 228 auf dem Eintrittsspalt 232 des Monochromators 234 fokussiert.

Schließlich gelangt der Punkt 188 in den Bereich des reflektierenden Sektors 202. Punkt 226 gelangt in den Bereich des ebenfalls reflektierenden, diametral gegenüberliegenden Sektors 200. Jetzt wird wieder das von der linienemittierenden Lichtquelle 180 ausgehende Lichtbündel 182 in den Referenzstrahlengang 244 reflektiert und schließlich im Punkt 226 zum Hohlspiegel 228 reflektiert.

Es ergibt sich somit folgende Folge von Lichtbündeln am Eintrittsspalt 232 des Monochromators 234:

| Chopperstellung | Hohlkathodenlampe | Deuteriumlampe |
|---|---|---|
| 1. | Probe | - |
| 2. | Referenz | - |
| 3. | - | Referenz |
| 4. | Probe | - |
| 5. | Referenz | - |
| 6. | - | Probe |

Das Lichtbündel von der linienemittierenden Lichtquelle 180, beispielsweise einer Hohlkathodenlampe, wird während jeder Umdrehung des Choppers 192 zweimal längs des Meßstrahlenganges durch den Probenbereich ("Probe") geleitet und zweimal längs des Referenzstrahlenganges ("Referenz"). Dazwischen wird das Lichtbündel 252 von der Deuteriumlampe einmal längs des Referenzstrahlenganges und einmal längs des Meßstrahlenganges geleitet.

Fig.10 zeigt einen abgewandelten Chopper 254, der an die Stelle des Choppers 192 von Fig.8 treten kann. Der Chopper 254 weist im wesentlichen die gleichen Sektoren auf wie der Chopper 192. Entsprechende Sektoren sind in Fig.10 mit den gleichen Bezugszeichen versehen wie in Fig.9. Zusätzlich zu diesen Sektoren ist ein weiterer Sektor 256 vorgesehen, der halbdurchlässig verspiegelt ist. Der Chopper

9

254 kann in eine feste Position gestellt werden, in welcher dieser halbdurchlässige Sektor 256 sich im Punkt 188 befindet. In dieser Stellung wirkt der Chopper 254 wie ein einfacher Strahlenteiler. Sowohl das Lichtbündel 182 von der Hohlkathodenlampe oder sonstigen linienemittierenden Lichtquelle 180 als auch das Lichtbündel 252 von der Deuteriumlampe werden in den Meßstrahlengang geleitet. Das Lichtbündel 182 tritt im Punkt 188 zur Hälfte durch den Sektor 256 des Choppers 254 hindurch, das Lichtbündel 252 wird zur Hälfte von dem Sektor 256 in den Meßstrahlengang reflektiert. Beide so gebildeten Teillichtbündel laufen durch den Meßstrahlengang und den Probenbereich. Beide Teillichtbündel werden im Punkt 226 von dem Sektor 196 durchgelassen. Bei dieser Betriebsweise werden die Hohlkathodenlampe 180 und die Deuteriumlampe alternierend eingeschaltet.

Die beschriebene Anordnung kann dahingehend abgewandelt werden, daß der Chopper nach Art von Fig. 9 ausgebildet ist. Der Chopper 192 von Fig. 9 wird in einer festen Position angehalten, in welcher die Lichtbündel 142 und 152 von der linienemittierenden Lichtquelle 180 und von der ein Kontinuum emittierenden Lichtquelle beide auf einen lichtdurchlässigen Sektor 196 oder 198 oder 204 fallen. Ein (nicht dargestellter) Strahlenteiler ist in den Strahlengang unmittelbar vor dem Chopper 192 wahlweise einschwenkbar. Die linienemittierende Lichtquelle 180 und die ein Kontinuum emittierende Lichtquelle erzeugen dann Lichtbündel, die kongruent durch den Probenbereich 222 hindurchtreten. Die Lichtquellen sind wieder elektronisch alternierend erregbar.

**Ansprüche**

1. Zweistrahlphotometer, enthaltend
   (a) eine Lichtquelle (10,58),
   (b) Detektormittel,
   (c) einen Probenbereich (44),
   (d) optische Mittel (16,40,46,36) zum Leiten eines von der Lichtquelle (10,58) ausgehenden Lichtbündels (14) als Meßlichtbündel (34) durch den Probenbereich (44) hindurch auf die Detektormittel,
   (e) Mittel (16,36) zum Leiten des gleichen Lichtbündels (14) als Referenzlichtbündel (32) unter Umgehung des Probenbereichs (44) auf die Detektormittel und
   (f) Choppermittel in Meß und Referenzlichtbündel, durch welche der Strahlengang des von der Lichtquelle (10) ausgehenden Lichtbündels (14) in einen Strahlengang des Meßlichtbündels (34) und in einen Strahlengang des Referenzlichtbündels an einer Aufspaltstelle aufspaltbar ist und diese Strahlengänge, nachdem das Meßlichtbündel (34) durch den Probenbereich (44) hindurchgetreten ist, an einer Rekombinationsstelle wieder zu einem Strahlengang rekombinierbar sind,
   **dadurch gekennzeichnet, daß**
   (g) Aufspaltstelle und Rekombinationsstelle räumlich dicht beieinander liegen und
   (h) die Choppermittel einen einzigen Chopper (20) aufweisen, der gleichzeitig die Aufspaltung und Rekombination von Meß- und Referenzlichtbündel (34 bzw. 32) bewirkt.

2. Zweistrahlphotometer nach Anspruch 1, **dadurch gekennzeichnet, daß** das Zweistrahlphotometer ein Atomabsorptions-Spektralphotometer und die Lichtquelle (10) eine linienemittierende Hohlkathodenlampe ist.

3. Zweistrahlphotometer nach Anspruch 1 oder 2, **dadurch gekennzeichnet, daß**
   (a) der einzige Chopper (20) auf wenigstens einem Sektor (24) verspiegelt und auf wenigstens einem anderen Sektor (26) durchlässig ist,
   (b) das von der Lichtquelle (10) ausgehende Lichtbündel (14) unter einem Winkel an der Aufspaltstelle auf die Oberfläche des Choppers (20) trifft und
   (c) das Meßlichtbündel (34) unter dem zu dem Winkel gehörenden Reflexionswinkel ebenfalls durch die Aufspaltstelle geleitet wird, wodurch Aufspaltstelle und Rekombinationsstelle zusammenfallen.

4. Zweistrahlphotometer nach Anspruch 3, **dadurch gekennzeichnet, daß**
   (a) ein von der Lichtquelle (10) ausgehendes Lichtbündel (14) von einem ersten Hohlspiegel (16) an der Aufspaltstelle auf dem Chopper (20) fokussiert wird,
   (b) das von dem durchlässigen Sektor (26) des Choppers (20) durchgelassene Meßlichtbündel (34) von einem zweiten Hohlspiegel (40) in dem Probenbereich (44) fokussiert wird und
   (c) das Meßlichtbündel (34) nach Durchtritt durch den Probenbereich (44) durch einen dritten Hohlspiegel (46) auf dem Chopper (20) an der Aufspaltstelle fokussiert wird.

5. Zweistrahlphotometer nach Anspruch 4, **dadurch gekennzeichnet, daß** der Strahlengang des Meßlichtbündels (34) ein gleichschenkliges Dreieck bildet.

6. Zweistrahlphotometer nach Anspruch 4 oder 5, **dadurch gekennzeichnet, daß** ein vierter Hohlspiegel (36) das durch den durchlässigen Sektor (26) des Choppers (20) hindurchtretende Meßlichtbündel (34) oder das von dem reflektierenden Sektor (24) des Choppers (20) reflektierte Referenzlichtbündel (32) auf eine Ausgangsblende fokussiert.

7. Zweistrahlphotometer nach Anspruch 2, **dadurch gekennzeichnet, daß** durch den einzigen Chopper (68) in einer Untergrundkompensationsphase der Messung ein Lichtbündel (92) von einer Lampe (58) in den Strahlengang einblendbar ist, die ein spektrales Kontinuum emittiert.

8. Zweistrahlphotometer nach den Ansprüchen 2 und 3, **dadurch gekennzeichnet, daß**

(a) das von der Lichtuelle (58) ausgehende Lichtbündel (62) während einer Meßphase und der Referenzphase an einer Einblendstelle (96) an einem reflektieren Sektor (98) des Choppers (68) reflektiert werden,

(b) das reflektierte Lichtbündel (72) auf den Aufspaltpunkt (74) des Choppers (68) zurückgeleitet wird,

(c) während der Meßphase ein durchlässiger Sektor (104) des Choppers (68) durch den Aufspaltpunkt (74) hindurchläuft und während der Referenzphase ein reflektierender Sektor (102) des Choppers (68) durch den Aufspaltpunkt (74) hindurchläuft, und

(d) während der Untergrundkompensationsphase ein durchlässiger Sektor (100) durch die Einblendstelle und ein durchlässiger Sektor (108) durch die Aufspaltstelle (74) hindurchläuft und

(e) ein Lichtbündel (92) von der ein Kontinuum emittierenden Lichtquelle (58) in der gleichen Richtung durch die Einblendstelle (96) geleitet ist, in welcher das Meß- und das Referenzlichtbündel von dem Chopper (68) an dieser Einblendstelle reflektiert wird.

9. Zweistrahlphotometer nach Anspruch 1 oder 2, **dadurch gekennzeichnet, daß** Aufspaltstelle (142) und Rekombinationsstelle (144) auf diametral gegenüberliegenden Seiten des einzigen Choppers (120) liegen.

10. Zweistrahlphotometer nach Anspruch 7, **dadurch gekennzeichnet, daß**

(a) während der Meßphase ein lichtdurchlässiger Sektor (176) des Choppers (120) durch die Aufspaltstelle (142) läuft und gleichzeitig ein reflektierender Sektor (174) des Choppers (120) durch die Rekombinationsstelle läuft, wobei das Meßlichtbündel (124) zu dem Meßstrahlengang (178) durchgelassen wird und nach Durchtritt durch den Probenbereich (138) an dem reflektierenden Sektor (174) in Richtung auf die Detektormittel reflektiert wird,

(b) Während der Referenzphase ein reflektierender Sektor (174) des Choppers (120) durch die Aufspaltstelle (142) läuft und gleichzeitig ein lichtdurchlässiger Sektor (176) des Choppers (120) durch die Rekombinationsstelle (144) läuft, wobei das Referenzlichtbündel (148) in den Referenzstrahlengang (150) reflektiert und durch den lichtdurchlässigen Sektor (176) gleichachsig zu dem Meßlichtbündel (124) in Richtung auf die Detektormittel durchgelassen wird.

11. Zweistrahlphotometer nach Anspruch 9, **dadurch gekennzeichnet, daß**

(a) während der Meßphase ein lichtdurchlässiger Sektor (196) des Choppers durch die Aufspaltstelle (188) läuft und gleichzeitig ein lichtdurchlässiger Sektor (198) des Choppers (192) durch die Rekombinationsstelle (226) läuft, wobei das Meßlichtbündel (208) zu dem Meßstrahlengang durchgelassen wird und nach Durchtritt durch den Probenbereich (222) von dem diametral gegenüberliegenden Sektor (198) in Richtung auf die Detektormittel durchgelassen wird,

(b) Während der Referenzphase ein reflektierender Sektor (200) des Choppers (192) durch die Aufspaltstelle (188) läuft und gleichzeitig ein reflektierender Sektor (202) des Choppers (192) durch die Rekombinationsstelle (226) läuft, wobei das Referenzlichtbündel (242) durch den ersteren Sektor (200) in den Referenzstrahlengang (244) reflektiert und durch den diametral gegenüberliegenden reflektierenden Sektor (202) gleichachsig zu dem Meßlichtbündel (208) in Richtung auf die Detektormittel reflektiert wird.

12. Zweistrahlspektrometer nach Anspruch 11, **dadurch gekennzeichnet, daß**

(a) der Chopper (192) einen lichtdurchlässigen Sektor (204) besitzt, dem ein reflektierender Sektor (206) diametral gegenüberliegt, und

(b) zur Untergrundkompensation ein Lichtbündel (252) von einer ein Kontinuum emittierenden Lichtquelle auf die Aufspaltstelle (188) des Choppers (192) geleitet wird, das gleichachsig zu dem an der Aufspaltstelle (188) reflektierten Referenzlichtbündel (242) ist.

13. Zweistrahlphotometer nach Anspruch 11, **dadurch gekennzeichnet, daß** sich die diametral gegenüberliegenden, lichtdurchlässigen Sektoren (196,198) über je einen stumpfen Winkel erstrecken.

14. Zweistrahlphotometer nach Anspruch 13, **dadurch gekennzeichnet, daß**

(a) der Chopper (254) einen weiteren, halbdurchlässigen Sektor (256) aufweist,

(b) der Chopper (254) in einer Stellung anhaltbar ist, in welcher die Lichtbündel (142, 152) von der linienemittierenden Lichtquelle und von der ein Kontinuum emittierenden Lichtquelle beide auf den halbdurchlässigen Sektor (256) fallen, und

(c) die linienemittierende Lichtquelle (180) und die ein Kontinuum emittierende Lichtquelle Lichtbündel erzeugen, die kongruent durch den Probenbereich (222) hindurchtreten, und elektronisch alternierend erregbar sind.

15. Zweistrahlphotometer nach Anspruch 13, **dadurch gekennzeichnet, daß**

(a) der Chopper (254) in einer Stellung anhaltbar ist, in welcher die Lichtbündel (142, 152) von der linienemittierenden Lichtquelle und von der ein Kontinuum emittierenden Lichtquelle beide auf einen lichtdurchlässigen Sektor (196 oder 198) fallen,

(b) ein Strahlenteiler in den Strahlengang vor den Chopper (192) wahlweise einschwenkbar ist und

(c) die linienemittierende Lichtquelle (180) und die durch ein Kontinuum emittierende Lichtquelle Lichtbündel erzeugen, die kongruent durch den Probenbereich (222) hindurchtreten, und elektronisch alternierend erregbar sind.

Fig.2

Fig.1

Fig.3

Fig.5

Fig.4

Fig.6

Fig.7

Fig.8

EP 0 412 410 A2

Fig.10

Fig.9